# EUROPEAN PATENT SPECIFICATION

(11) **EP 0 456 615 B1**
(45) Date of publication and mention of the grant of the patent: **02.11.1994**
(21) Application number: 91830146.6
(22) Date of filing: 16.04.1991
(51) Int. Cl.: G01V 3/08

(54) **A method of detecting the position of a mechanical part made of ferromagnetic material**
Positionsdetektierungsverfahren eines mechanischen Teils von ferromagnetischem Material
Procédé pour déterminer la position d'un élément mécanique composé d'un matériel ferromagnétique

(30) Priority: 30.04.1990 IT 6732290
(43) Date of publication of application: 13.11.1991
(73) Proprietor: FIAT AUTO S.p.A., 10135 Torino (IT)
(72) Inventor: Ansaldi, Ermanno, I-10139 Torino (IT); Malvicino, Carloandrea, I-10146 Torino (IT); Palazzetti, Mario, I-10051 Avigliana (Torino) (IT); Zanella, Roberto, I-10094 Giaveno (Torino) (IT)
(74) Representative: Bosotti, Luciano

(56) References cited:
- DE-B- 1 270 657
- FR-A- 2 056 037
- OA-A- 4 893
- US-A- 3 041 416

## Description

The present invention relates to a method of detecting the position of or an operation which has taken place on a mechanical part made of ferromagnetic material.

Known methods of this type provide for a mechanical incision to be made in a predetermined portion of the surface of the part, or for the application of a target of ferromagnetic material, and then for its position to be detected by an instrument such as an inductive sensor. A sensor of this type is usually constituted by a magnetised bar on which a coil is wound so that, when the sensor is made to pass the incision formed in the surface of the part, the magnetic flux linkage induced in the coil varies with the consequent generation of an electromotive force which can be detected externally.

Such a method has the disadvantage that the sensor is also sensitive to any other non-uniformity in the surface of the part and to any background noise which is due mainly to the residual magnetism of the part and can disturb the useful signal. Moreover, the sensor must be brought to within 0.5 mm of the surface of the part in order to detect a signal of appreciable intensity.

Furthermore, the fact that the surface of the part has to be cut involves the need for further mechanical working which is a laborious operation, particularly if the parts are already assembled.

DE-B-1 270 657 discloses the control of machines by means of a tape having magnetized markers and by a Habb sensor. This document is taken for the preamble of present claim 1.

In order to avoid the disadvantages mentioned,the present invention provides a method as set out in claim 1.

The method of detection according to the invention has the advantage that it is substantially insensitive to any non-uniformity in the surface of the part and that a very strong useful signal, which is not substantially affected by background noise, is generated. This enables measurements to be made even if the sensor is kept at a distance of the order of 1.5 mm from the surface of the part to be examined, with very precise detection.

The method of the invention has the further advantage that it can be carried out under static and not necessarily dynamic conditions, as is essential in the aforementioned prior art in which relative motion must take place between the part and the sensor for the latter to experience a variation in the magnetic flux induced in correspondence with the incision in the surface of the part.

In a preferred embodiment of the method according to the invention, the portion of the mechanical part is magnetised by means of an electromagnet which is brought near to the portion of the part to be magnetised.

The magnetic marking operation can thus be carried out very quickly and easily, even on parts which have been mounted at any stage of their assembly.

Further advantages and characteristics of the present invention will become clear from the detailed description which follows, with reference to the appended drawings, provided purely by way of non-limiting example, in which:
Figure 1 shows schematically a device for carrying out a method of detection according to the invention, and
Figure 2 shows in perspective an electromagnet used for carrying out the methods of detection according to the invention.

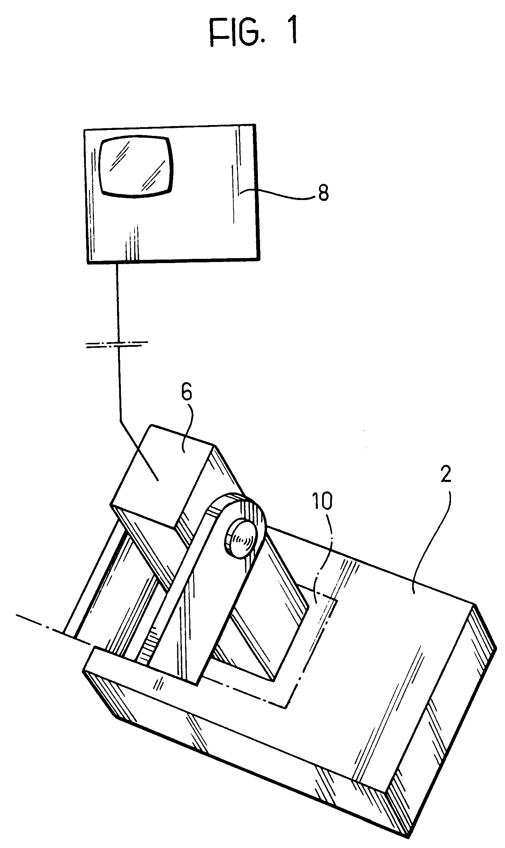

With reference to Figure 1, a generic mechanical part made of ferromagnetic material is indicated 2. A magnetic field sensor 6, for example, of the linear Hall-effect type, such as the LOHET II SS94A1 transducer produced by Microswitch of the Honeywell Group, is fixed at a distance of no more than 1.5mm from the periphery of the disc 2. The sensor 6 is connected to a device 8 for amplifying and displaying the signals emitted, in known manner not described further.

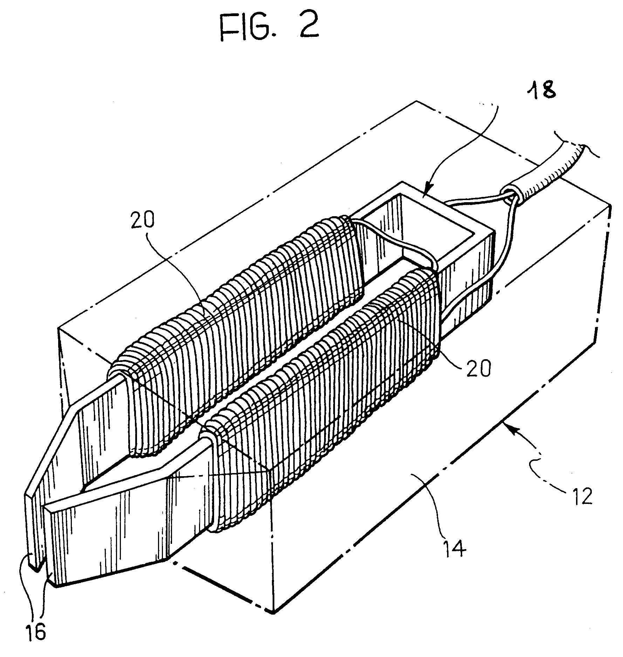

A surface portion 10 of the part 2 has been magnetised permanently beforehand, in correspondence with an operation which has taken place at a particular position on the part, by an electromagnet shown in Figure 2. This is constituted by a casing 14 of plastics material from which the converging ends 16 of a substantially U-shaped core 18 of soft sheet-iron project.

Coils 20 are wound on the main arms of the core 18 and are connected to an electrical supply circuit, not shown. The ends 16 of the core 18 are brought into contact with the portion 10 of the surface of the part 2 and current is passed through the coils 20 so that the adjacent surface portion 10 of the part 2, that is, a narrow angular portion of the periphery of the flywheel, is permanently magnetised.

The sensor 6 therefore generates a detection signal as a result of the passage of the portion 10 (Figure 1) in front of it. This enables the position of the part 2 or an operation which has taken place thereon to be identified with a resolution found experimentally to be less than about 0.5 mm.

A position reference is thus created which can be used either to determine the position of the part or to identify an operation or working which has been carried out on the part.

The method of detection described above can be used for parts of any shape, provided that they are made of ferromagnetic material, by the magnetisation of a predetermined portion of the part with the electromagnet 14 and the subsequent examination of its surface with a magnetic field sensor which may be mounted movably. The latter emits a signal when it is adjacent the magnetised portion of the part and thus determines the position assumed thereby.

Naturally, the principle of the invention remaining the same, the details of construction and forms of embodiment may be varied widely with respect to those described and illustrated, purely by way of example, without thereby departing from its scope as claimed.

## Claims

1. A method of magnetic detection comprising the steps of:
- permanently magnetising at least one predetermined portion (10) of a piece (2) of ferromagnetic material,
- examining the surface of the piece (2) with a magnetic field sensor (6) so that, when the sensor (6) is near the magnetised portion (10) of the piece (2), it emits a detection signal, and
- identifying the magnetised portion (10) as a result of the emission of the detection signal,
said method being characterised in that it is applied to detect the position of or an operation which has taken place on the piece (2), which is a mechanical part which may then, if necessary, be subjected to further working
- not at the point marked-, assembled with other elements.

2. A method according to claim 1, characterised in that the sensor (6) is of the Hall-effect type.

3. A method according to any one of the preceding claims, characterised in that the portion (10) of the part (2) is magnetised by means of an electromagnet (12) which is brought near the portion (10).

4. A method according to any one of the preceding claims, characterised in that the sensor (6) is kept at a distance of no more than 1.5 mm from the surface of the part (2).

## Patentansprüche

1. Magnetisches Erfassungsverfahren, umfassend die Schritte:
- Permanentmagnetisieren wenigstens eines vorbestimmten Abschnitts (10) eines Stücks (2) aus ferromagnetischem Material,
- Untersuchen der Oberfläche des Stücks (2) mit einem Magnetfeldsensor (6) derart, daß dann, wenn der Sensor (6) sich in der Nähe des magnetisierten Abschnitts (10) des Stücks (2) befindet, er ein Erfassungssignal abgibt, und
- Identifizieren des magnetisierten Abschnitts (10) als Folge der Emission des Erfassungssignals,
wobei das Verfahren **dadurch** **gekennzeichnet** ist, daß es auf die Erfassung der Position des Stücks (2) oder eines Arbeitsvorgangs, der an dem Stück (2) stattgefunden hat, angewendet wird, wobei das Stück (2) ein mechanisches Teil ist, welches dann erforderlichenfalls - nicht an dem markierten Punkt - weiterer Bearbeitung unterzogen, mit anderen Elementen zusammengesetzt werden kann.

2. Verfahren nach Anspruch 1, **dadurch** **gekennzeichnet**, daß der Sensor (6) vom Hall-Effekt-Typ ist.

3. Verfahren nach einem der vorhergehenden Ansprüche, **dadurch** **gekennzeichnet**, daß der Abschnitt (10) des Teils (2) mittels eines Elektromagneten (12) magnetisiert wird, der in die Nähe des Abschnitts (10) gebracht wird.

4. Verfahren nach einem der vorhergehenden Ansprüche, **dadurch** **gekennzeichnet**, daß der Sensor (6) in einem Abstand von nicht mehr als 1,5 mm von der Oberfläche des Teils (2) gehalten wird.

## Revendications

1. Procédé de détection magnétique comprenant les étapes suivantes :
- l'aimantation de manière permanente d'au moins une partie prédéterminée (10) d'une pièce (2) d'un matériau ferromagnétique,
- l'examen de la surface de la pièce (2) avec un capteur (6) de champ magnétique afin que, lorsque le capteur (6) est proche de la partie aimantée (10) de la pièce (2), il émette un signal de détection, et
- l'identification de la partie aimantée (10) à la suite de l'émission du signal de détection,
le procédé étant caractérisé en ce qu'il est appliqué à la détection de la position de la pièce (2) ou d'une opération qui a été exécutée sur la pièce (2) qui est une pièce mécanique qui peut alors être le cas échéant soumise à un autre usinage, éventuellement en dehors du point marqué, en association avec d'autres éléments.

2. Procédé selon la revendication 1, caractérisé en ce que le capteur (6) est du type à effet Hall.

3. Procédé selon l'une quelconque des revendications précédentes, caractérisé en ce que la partie (10) de la pièce (2) est aimantée par un électro-aimant (12) qui est placé à proximité de ladite partie (10).

4. Procédé selon l'une quelconque des revendications précédentes, caractérisé en ce que le capteur (6) est maintenu à une distance qui ne dépasse 1,5 mm de la surface de la pièce (2).
